# EUROPÄISCHE PATENTSCHRIFT

(11) **EP 2 415 697 B1**
(45) Veröffentlichungstag und Bekanntmachung des Hinweises auf die Patenterteilung: **06.03.2013**
(21) Anmeldenummer: 11175499.0
(22) Anmeldetag: 27.07.2011
(51) Int. Cl.: B65G 53/46

(54) **Fördervorrichtung und Verfahren zu deren Überwachung**
Transport device and method for monitoring same
Dispositif de transport et son procédé de surveillance

(30) Priorität: 03.08.2010 DE 102010036822
(43) Veröffentlichungstag der Anmeldung: 08.02.2012
(73) Patentinhaber: Jaudt Dosiertechnik Maschinenfabrik GmbH, 86167 Augsburg (DE)
(72) Erfinder: Morell, Wolfgang, 86199 Augsburg (DE)
(74) Vertreter: Wohlfarth, Ulrich

(56) Entgegenhaltungen:
- EP-A1- 0 653 606
- DE-A1- 19 854 959
- DE-A1-102008 033 629
- JP-A- 2 173 558

## Beschreibung

Die Erfindung betrifft eine Fördervorrichtung für Schüttgüter nach dem Oberbegriff des Anspruchs 1 und ein Verfahren zur Überwachung einer solchen Fördervorrichtung nach dem Oberbegriff des Anspruchs 13.

Aus der DE 10 2008 033 629 A1 ist eine gattungsgemäße Zellenradschleuse bekannt, bei der das Zellenradgehäuse und ein in diesem umlaufendes Zellenrad aus elektrisch leitfähigem Material hergestellt sind. Zwischen dem Zellenradgehäuse und dem Zellenrad ist ein ohmsches Widerstandsbauteil geschaltet, dessen ohmscher Widerstand kleiner ist als ein Megaohm. Dies dient der Vermeidung von elektrostatischen Aufladungen des Zellenrads während des Betriebs und ist aus einer Vielzahl von gesetzlichen Vorschriften bekannt. Weiter ist dort eine Logikschaltung vorgesehen, die beim Betrieb der Zellenradschleuse einen elektrischen Zusatzkontakt zwischen dem Zellenradgehäuse und dem Zellenrad zusätzlich zu dem vorgegebenen elektrischen Kontakt über das Widerstandsbauteil erfasst. Hierdurch kann ein unerwünschter mechanischer Kontakt des Zellenrads mit dem Zellenradgehäuse oder eine andere elektrisch leitende Verbindung zwischen Zellenrad und Zellenradgehäuse, beispielsweise abgeschliffene Metallspäne im geförderten Schüttgut, sicher erfasst werden. Die Erfassung erfolgt dort dadurch, dass die Logikschaltung den elektrischen Zusatzkontakt mittels einer Messung des ohmschen Widerstandes zwischen dem Zellenradgehäuse und dem Zellenrad erfasst.

Eine entsprechende Überwachung eines elektrischen Kontakts zwischen Zellenrad und Zellenradgehäuse wird seit langem unter dem Namen Rotasafe RM von der Firma Rota Val Ltd. hergestellt und vertrieben. Dort wird mittels eines Widerstandsnetzwerks ein Kontakt zwischen Rotorzellenrad und Zellenradgehäuse detektiert und an einer Anzeige ausgegeben.

Die oben beschriebene reine Widerstandsmessung eines Kontakts zwischen Zellenradgehäuse und Zellenrad weist jedoch zahlreiche Nachteile auf. So muss zur Erfassung des Widerstands stets eine gewisse Spannung zwischen Zellenradgehäuse und Zellenrad angelegt werden, um beim Kontakt zwischen Zellenrad und Zellenradgehäuse einen Strom zu erzeugen, mittels dem der Widerstand gemessen wird. Dies ist gerade in explosionsgefährdeten Bereichen von Schüttgütern unerwünscht, um Funkenauslösung zu vermeiden. Folglich können nur sehr geringe Messspannungen verwendet werden, was zu einer schlechten Messauflösung führt. Dies hat zur Folge, dass die Messung regelmäßig Fehlalarme auslöst, welche den Betrieb der Fördervorrichtung unerwünscht behindern.

Die DE 199 36 136 C1 offenbart eine Zellenradschleuse, bei der das Spaltmaß zwischen Zellenrad und Gehäusebohrung in jedem Betriebszustand möglichst klein zu halten ist, wobei eine Berührung vermieden werden soll. Hierzu ist dort das Zellenrad und/oder die Gehäusebohrung radial verformbar, wobei mittels eines im Gehäuse eingesetzten induktiven Sensors der Abstand zwischen der ortsfest mit ihm verbundenen Gehäusebohrung und den an ihm vorbeidrehenden Stegen des Zellenrads gemessen werden kann. Über den ermittelten Messwert wird die Heizleistung einer elektrischen Heizschlange eingestellt, welche letztendlich das Gehäuse so erwärmt, dass es sich radial ausdehnt. Nachteilig ist hierbei, dass extra ein induktiver Sensor im Gehäuse vorgesehen werden muss, was u.a. mit größerem Aufwand bei der Herstellung des Gehäuses einhergeht. Zudem erfolgt dort die Messung des Abstands nur punktuell an der Stelle des Sensors. Auch wird durch die Bohrung für den Sensor das Gehäuse geschwächt. Weiter besteht die Gefahr der Verunreinigungen des transportierten Guts über das Gewinde der Bohrung im Gehäuse, was gerade im Bereich der Lebensmittelherstellung vermieden werden muss. Aufgrund der unterschiedlichen Werkstoffe haben der Sensor und das Zellenradgehäuse ein unerwünschtes unterschiedliches Ausdehnungs- und Verschleißverhalten. Durch die fehlende Überdrehung der Sensorfläche ergibt sich eine nicht exakte Oberfläche. Eine kapazitive Messung des Abstands ist dort auch nicht ansatzweise offenbart.

Weiter besteht gerade bei feuchten Schüttgütern das Problem, dass aufgrund der Feuchtigkeit ein schwach leitender elektrischer Kontakt zwischen Zellenradgehäuse und Zellenrad hergestellt wird, welcher aufgrund der üblicherweise geringen Messspannung und Messauflösung bei der reinen Widerstandsmessung fehlerhaft als elektrischer Kontakt zwischen Zellenradgehäuse und Zellenrad detektiert werden kann. Auch dies führt zu unnötigen Fehlalarmen und kann besonders bei feuchten Schüttgütern den Einsatz der Messung vollständig unmöglich machen.

Darüber hinaus muss bei der ohmschen Messung der Messkreis über eine galvanische Verbindung in das Zellenrad geschlossen werden, beispielsweise durch eine Schleifringanordnung. Dies weist den Nachteil auf, dass die Schleifkontakte durch Abnutzung und die Umgebungsbedingungen ihre elektrischen und auch mechanischen Eigenschaften ändern, was sich negativ auf die Messgenauigkeit auswirkt. Deshalb muss bei dem oben beschriebenen Messsensor der Firma Rota Val die Schleifringeinheit alle 12 Monate ausgetauscht werden.

Hinzukommt, dass durch den längeren Betrieb derartiger Zellenradschleusen die radial äußeren Enden der Zellenradflügel sowie die Wandungen des Zellenradgehäuses abgenutzt werden, sich die Spalteweite also im Laufe der Zeit vergrößert. Hierbei besteht die Gefahr, dass insbesondere metallische Teilchen im geförderten Schüttgut keinen Kontakt zwischen Zellenradflügeln und Zellenradgehäuse herstellen und somit kein Alarm ausgelöst wird. Überschreitet die Spaltweite einen vorgegebenen Grenzwert, so verliert sie zudem ihre Eigenschaften als Explosions- und Flammbarriere.

Die EP 0 653 606 A1 offenbart eine Vorrichtung zur dynamischen Messung des Abstands zwischen einander gegenüberliegenden Rotor- und Statorflächen einer rotierenden Maschine, bei der im Gehäuse eine gegenüber diesem elektrisch isolierte, kapazitiv messende Elektrode integriert ist. Die Elektrode bildet mit jedem Schaufelende des Rotors eine Kapazität, die vom Abstand zwischen Schaufelende und Elektrode abhängt. Nachteilig dabei ist, dass sich die Kapazität durch die drehenden Schaufelenden ständig ändert und im Gehäuse eine Ausnehmung für die Elektrode vorgesehen werden muss, welche zudem noch elektrisch gegenüber dem Gehäuse isoliert sein muss. Da Teile der Elektrode und ihrer Isolierung im Inneren des Gehäuses liegen, müssen beide aus einem Material bestehen, welche gegenüber den im Gehäuse befindlichen Materialien ausreichend robust sind, um eine Beschädigung und schnelle Abnutzung der Elektrode oder der Isolierung zu verhindern.

Der Erfindung liegt deshalb die Aufgabe zugrunde, eine Fördervorrichtung und ein Verfahren zur Überwachung einer solchen Fördervorrichtung bereitzustellen, welche die oben genannten Nachteile überwindet und einen sicheren und zuverlässigen Betrieb der Fördervorrichtung ermöglichen und insbesondere eine Vergrößerung der Spaltweite sowie elektrische Kontakte zwischen einem Rotor und einem Gehäuse der Fördervorrichtung zuverlässig und hochauflösend erfassen.

Diese Aufgabe wird durch eine Fördervorrichtung mit dem Merkmal des Anspruchs 1 und ein Verfahren zur Überwachung einer solchen Fördervorrichtung mit den Merkmalen des Anspruchs 13 gelöst. Vorteilhafte Ausgestaltungen und zweckmäßige Weiterbildungen der Erfindung sind hier in den Unteransprüchen angegeben.

Eine eingangs genannte Fördervorrichtung und ein eingangs genanntes Verfahren sind erfingdungsgemäß dadurch gekennzeichnet, dass eine Messvorrichtung zur Erfassung einer durch Gehäuse und Rotor gebildeten Hauptkapazität vorgesehen ist, wobei eine zwischen Gehäuse und Rotor gebildete Hauptkapazität erfasst wird. Hierdurch lässt sich einfach und sicher auf berührungslose Weise eine Änderung der Spaltweite wie auch eines elektrischen Kontakts zwischen Gehäuse und Rotor bestimmen.

In einer bevorzugten Ausführung kann die Fördervorrichtung eine Zellenradschleuse mit einem als Zellenradgehäuse ausgebildeten Gehäuse und einem als Zellenrad ausgebildeten Rotor mit als Zellenradflügeln ausgebildeten Förderelementen sein.

In einer vorteilhaften Ausführung kann ein Entladewiderstand der Fördervorrichtung durch eine in einer Kupplung zwischen einer Welle des Rotors und einem Förderantrieb der Fördervorrichtung vorgesehene Kupplungsisolierung gebildet sein. Vorteilhaft kann der Entladewiderstand alternativ oder zusätzlich durch eine Lagerisolierung mindestens eines Lagers des Rotors im Gehäuse gebildet sein. Hierdurch kann der geforderte Erdungswiderstand ohne weitere zusätzliche Bauteile und anfälligen Verbindungen zwischen Rotor und Gehäuse bereitgestellt werden.

Bevorzugt weist die Messvorrichtung ein Koppelelement zur berührungslosen, insbesondere kapazitiven, elektrischen Kopplung mit dem Rotor auf, wobei in einer messtechnisch vorteilhaften Weiterbildung eine durch das Koppelelement und den Rotor gebildete Koppelkapazität größer als die Hauptkapazität und/oder eine durch das Koppelelement und das Gehäuse gebildete Störkapazität kleiner als die Hauptkapazität sein kann. Hierdurch kann die Hauptkapazität einfacher und mit höherer Auflösung bestimmt werden.

In einer Weiterbildung kann die Messvorrichtung mit einer Auswerteschaltung verbunden sein, wobei die Auswerteschaltung eine Messschaltung zum Erzeugen eines der Hauptkapazität entsprechenden Messwertsignals aufweist. Bevorzugt kann die Auswerteschaltung eine Referenzschaltung zum Erzeugen eines einer vorgegebenen Referenzkapazität entsprechenden Referenzsignals bzw. Referenzwerts und eine das Referenzsignal und das Messsignal empfangende Vergleichsschaltung zum Vergleichen des Messsignals und des Referenzsignals aufweisen.

Eine Weiterbildung des erfindungsgemäßen Verfahrens sieht vor, dass zusätzlich zur Hauptkapazität ein ohmscher Widerstand zwischen Gehäuse und Rotor erfasst wird, um eine aus diesen gebildete Impedanz zu bestimmen.

Weiter kann der erfasste Wert der Hauptkapazität mit einem vorgegebenen Referenzwert verglichen und ein Warnsignal ausgegeben werden, wenn der erfasste Wert der Hauptkapazität um einen Warngrenzwert vom Referenzwert abweicht, und/oder ein Alarmsignal ausgegeben werden, wenn der erfasste Wert der Hauptkapazität um einen Alarmgrenzwert vom Referenzwert abweicht.

Vorteilhaft kann aus einer Abweichung zwischen dem erfassten Wert der Hauptkapazität und einem vorgegebenen Referenzwert eine Maß für eine Spaltweite zwischen dem Gehäuse und radial äußeren Enden von Förderelementen des Rotors abgeleitet werden, welches ggf. vorteilhaft dem Bedienpersonal der Fördervorrichtung angezeigt werden kann. Bevorzugt wird die Abweichung zwischen dem erfassten Wert der Hauptkapazität und einem vorgegebenen Referenzwert kontinuierlich oder quasikontinuierlich erfasst, um rechtzeitig einen Fehler feststellen, anzeigen und ggf. die Fördervorrichtung manuell oder automatisch stillsetzen zu können.

In einer weiteren vorteilhaften Ausbildung kann die Hauptkapazität durch ein Koppelelement zur berührungslosen, insbesondere kapazitiven, elektrischen Kopplung mit dem Rotor erfasst werden, wobei in einer vorteilhaften Ausgestaltung dieser Ausbildung die Hauptkapazität aus einem vom Koppelelement abgeleiteten Messsignal, einer durch das Koppelelement und den Rotor gebildeten Koppelkapazität und/oder einer durch das Koppelelement und das Gehäuse gebildeten Störkapazität erfasst werden. Die Werte der Koppelkapazität und der Störkapazität hängen ausschließlich von den geometrischen Parametern der Fördervorrichtung und den dielektrischen Eigenschaften der Isolierung ab, weshalb sie nach einer einmaligen Ermittelung als bekannt und als konstant angenommen werden kann.

In einer weiteren vorteilhaften Ausgestaltung kann der Referenzwert dem Wert der Koppelkapazität vor der ersten Inbetriebnahme der Fördervorrichtung entsprechen. Aufgrund der Serienschaltung der Hauptkapazität und der Koppelkapazität ist der maximale Serien-Kapazitätswert der Wert der Koppelkapazität, also wenn die Hauptkapazität kurzgeschlossen wird. Im Normalbetrieb hingegen verringert die Hauptkapazität den Serien-Kapazitätswert, wobei der Hauptkapazitätswert u.a. durch Abnutzung geringer wird, so dass der erfasste Serien-Kapazitätswert von Haupt- und Koppelkapazität ab Betriebnahme größer wird und sich dem Wert der Koppelkapazität annähert. Beträgt in einer Weiterbildung des Verfahrens der Alarmgrenzwert höchstens 10%, bevorzugt 5 % und besonders bevorzugt 1% der Koppelkapazität, so ist dies eine einfache und zuverlässige Detektion eines elektrisch leitenden Kontakts zwischen Gehäuse und Rotor.

Weitere Besonderheiten und Vorzüge der Erfindung ergeben sich aus der folgenden Beschreibung eines bevorzugten Ausführungsbeispiels anhand der Zeichnungen. Es zeigen:
- **Fig. 1**: eine teilweise geschnittene seitliche Ansicht auf eine erfindungsgemäße Fördervorrichtung;
- **Fig. 2**: eine Schnittansicht durch Fördervorrichtung aus Fig. 1;
- **Fig. 3**: eine Draufsicht auf die Fördervorrichtung aus Fig. 1;
- **Fig. 4**: eine Anzeige- und Bedieneinheit der Fördervorrichtung aus Fig. 1;
- **Fig. 5**: eine Detailansicht einer motorseitigen Lagerung der Fördervorrichtung aus Fig. 1;
- **Fig. 6**: einen Querschnitt an der in Fig. 5 mit A-A gekennzeichneten Stelle;
- **Fig. 7**: eine stark vergrößerte Ansicht aus Fig. 5;
- **Fig. 8**: ein schematisches elektrisches Ersatzschaltbild einer erfindungsgemäßen Messvorrichtung.

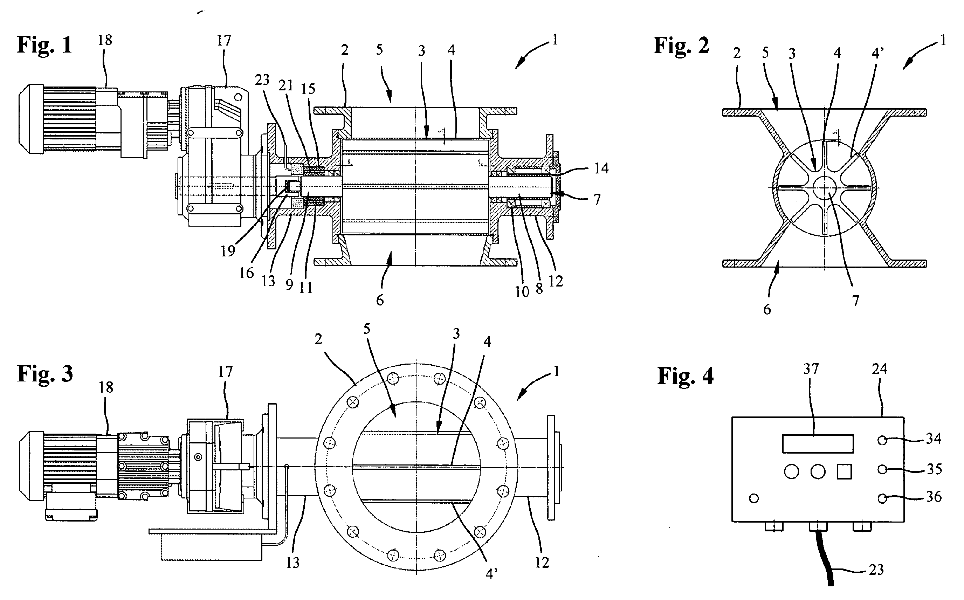

Die Fig. 1 bis 3 zeigen unterschiedliche Ansichten einer erfindungsgemäßen Fördervorrichtung in Form einer an sich bekannten Zellenradschleuse 1. Die Zellenradschleuse 1 weist ein Zellenradgehäuse 2 und ein im Zellenradgehäuse 2 drehbar gelagertes Zellenrad 3 auf. Das Zellenrad 3 weist eine Vielzahl von Zellenradflügeln 4, 4' auf, wie insbesondere aus Fig. 2 und 3 erkennbar. Jeweils zwei benachbarte Zellenradflügel 4, 4' etc. bilden Taschen für ein Schüttgut aus, welches durch einen Schüttguteinlass 5 in das Zellenradgehäuse 2 gelangt. Die einzelnen Taschen des Zellenrads 3 fördern dann durch Drehung des Zellenrads 3 das Schüttgut zu einem Schüttgutauslass 6, an dem das Schüttgut schwerkraftbedingt herausfällt. Anstelle der hier beschriebenen Zellenradschleuse 1 können auch andersartig ausgebildete Fördervorrichtungen für Schüttgüter gewählt werden, beispielsweise Vertikalschleusen mit vertikal verlaufender Achse, Durchblasschleusen, bei denen das Schüttgut durchgeblasen wird oder andere Schüttgutarmaturen wie Förderschnecken etc.

Sowohl das Zellenradgehäuse 2 als auch das Zellenrad 3 sind aus elektrisch leitenden Materialien, vorzugsweise Edelstahl hergestellt. Das Zellenrad 3 ist über eine Welle 7 drehbar im Zellenradgehäuse 2 gelagert. Hierzu weist die Welle 7 über die Zellenradflügel 4 ragende Wellenenden 8 bzw. 9 auf, welche in an sich bekannter Weise mittels Lagern 10, 11 in Lagerschilden 12, 13 des Zellenradgehäuses drehbar gelagert sind.

Um eine später beschriebene Impedanz- bzw. Kapazitätsmessung zwischen Zellenradgehäuse 2 und Zellenrad 3, und insbesondere den radial äußeren Enden der Zellenradflügel 4, 4' durchführen zu können, weisen die Lager 10 bzw. 11 als Isolationshülsen 14 und 15 ausgebildete Isolierungen zur elektrisch isolierten Lagerung des Zellenrads 3 gegenüber dem Zellenradgehäuse 2 auf.

Am motorseitigen Wellenende 9 ist eine Kupplung 16 zur Verbindung mit einem Getriebe 17 vorgesehen, das wiederum mit einem elektrischen Antriebsmotor 18 verbunden ist. Getriebe 17 und Antriebsmotor 18 bilden einen Förderantrieb des Zellenrads 3. Die Kupplung 16 weist eine Kupplungsisolierung 19 auf, um das Zellenrad 3 auch gegenüber dem Getriebe 17 und dem Motor 18 elektrisch zu isolieren.

Da gerade im Bereich explosionsgeschützter Anlagen zur Vermeidung elektrostatischer Auf bzw. Entladungen alle metallischen Teile einer Fördervorrichtung 1 über einen maximalen Widerstand kleiner als 1 MΩ geerdet bzw. miteinander verbunden sein müssen, ist das Zellenrad 3 über einen hier nicht gezeigten definierten Erdungswiderstand kleiner 1 MΩ geerdet bzw. mit dem Zellenradgehäuse 2 verbunden. In einer vorteilhaften Ausführung der Erfindung kann die Kupplungsisolierung 19 aus einem elektrisch leitenden Kunststoff gebildet sein, der den oben geforderten Wert des Erdungswiderstands aufweist, so dass das Zellenrad 3 mit dem definierten Erdungswiderstand mit dem geerdeten Förderantrieb verbunden ist. Alternativ oder zusätzlich kann der Erdungswiderstand vorteilhaft auch durch die Isolierhülse 15 gebildet werden, welche hierzu aus einem elektrisch leitenden Kunststoff mit dem geforderten Wert des Erdungswiderstands gebildet ist. Anstelle elektrisch leitender Kunststoffe für die Kupplungsisolierung 19 und/oder die Isolierhülse 14 können auch andere geeignete Materialien oder Mittel gewählt werden, beispielsweise Kunststofflager mit einem entsprechenden Erdungswiderstand. Da der definierte Erdungswiderstand bekannt ist, kann er bei der später beschriebenen Ermittelung unterschiedlicher Kapazitätswerte berücksichtigt werden.

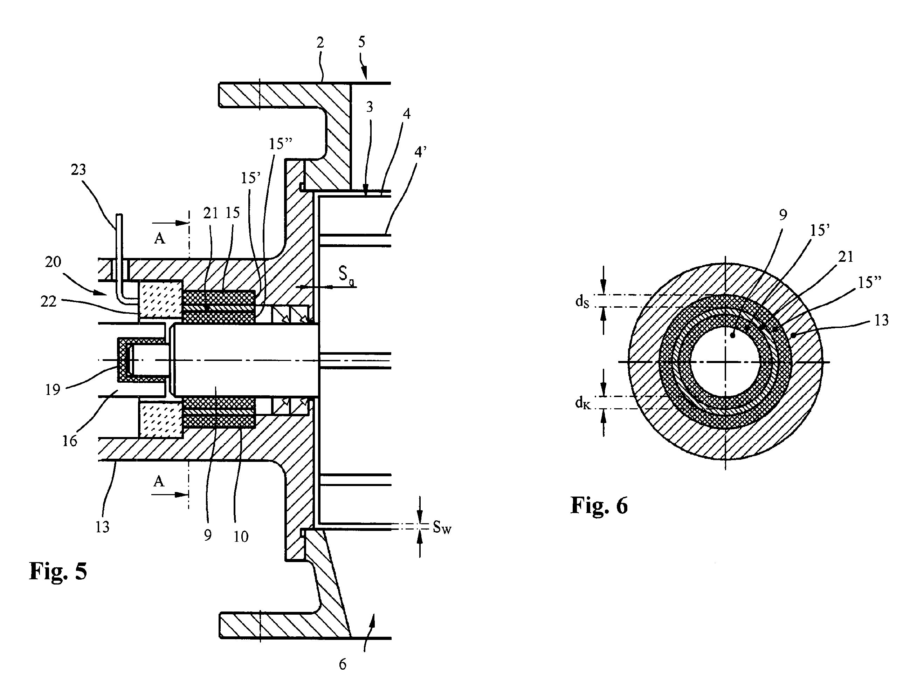

Im motorseitigen Lagerschild 13 ist eine Messvorrichtung 20 zur Erfassung einer durch Zellenradgehäuse 2 und Zellenrad 3 gebildeten Hauptkapazität C_{H} vorgesehen, welche anhand von Fig. 5 bis 8 detailliert erläutert wird.

Die Messvorrichtung 20 weist ein Koppelelement in Form einer in die Isolierung 15 eingesetzten, aus elektrisch leitendem Material hergestellten Messhülse 21 auf, welche das antriebsseitige Wellenende 9 der Welle 7 umgreift. Hierdurch bildet sich eine Rotorisolierung 15' zwischen Messhülse 21 und Zellenrad 3 und eine Gehäuseisolierung 15" zwischen Messhülse 21 und Zellenradgehäuse 2 aus.

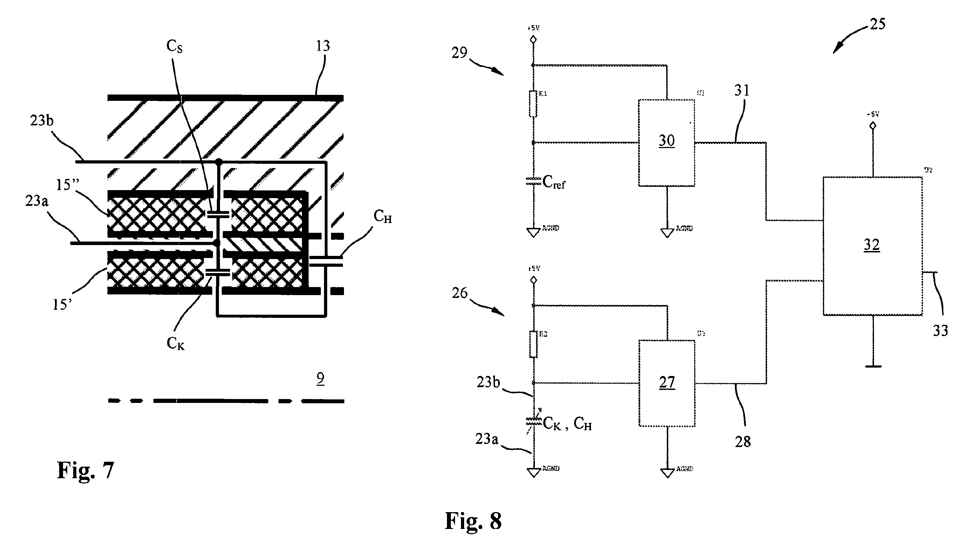

Weiter bilden sich hierdurch die in Fig. 7 dargestellte Kapazitäten aus: Zusätzlich zur Hauptkapazität C_{H} zwischen Zellenradgehäuse 2 und Zellenrad 3 eine zwischen Messhülse 21 und Zellenrad 3 gebildete Koppelkapazität C_{K}, welche vorteilhaft größer und besonders vorteilhaft deutlich größer als die Hauptkapazität C_{H} gewählt wird. Eine zwischen Messhülse 21 und Zellenradgehäuse 2 gebildete Störkapazität C_{S} wird vorteilhaft kleiner als die Hauptkapazität C_{H} und besonders vorteilhaft deutlich kleiner als die Hauptkapazität C_{H} gewählt. Hierzu wird die Dielektrizitätszahl εᵣ der Rotorisolierung 15' größer, bevorzugt deutlich größer als die Dielektrizitätszahl εᵣ der Gehäuseisolierung 15" gewählt. In einer nicht gezeigten Ausführung kann dies alternativ oder zusätzlich dadurch erreicht werden, dass die Rotorisolierung 15' sehr viel dünner als die Gehäuseisolierung 15" gewählt wird, und/oder dass ein Abstand d_{K} zwischen Messhülse 21 und Rotor 3 kleiner als ein Abstand d_{S} zwischen Messhülse 21 und Gehäuse 2 ist.

Sowohl die Messhülse 21 als auch das Lagerschild 13 sind in einem Messanschlussring 22 mit voneinander elektrisch getrennten Messleitungen 23a, 23b einer Messleitung 23 verbunden. Hierüber kann die in Fig. 7 schematisch dargestellte, in Serie geschaltete Hauptkapazität C_{H} und Koppelkapazität C_{K} gemessen werden. Da die Koppelkapazität C_{K} ausschließlich von den geometrischen Parametern und den dielektrischen Eigenschaften der Isolierung 15' abhängt, kann sie als konstant angenommen werden. Im Gegensatz dazu wird die Hauptkapazität C_{H} im Betrieb und im Lauf der Zeit u.a. durch Abnutzung verändert und auch durch das geförderte Schüttgut beeinflusst. Von einem elektrischen Kontakt zwischen Zellenradgehäuse 2 und Zellenrad 3 ausgenommen, wird die Hauptkapazität C_{H} im wesentlichen durch die Änderungen einer Spaltweite S_{W}, also des Abstands zwischen den Enden der Zellenradflügel 4, 4' und der inneren Wandung des Zellenradgehäuses 2 in radialer Richtung, und gegebenenfalls Dämpfungseinflüssen des geförderten Schüttgutes verändert.

Die Störkapazität C_{S} kann als konstant angenommen werden und wird so klein gewählt, dass sie die Erfassung der Hauptkapazität C_{H} über die Messung der in Serie geschaltete Hauptkapazität C_{H} und Koppelkapazität C_{K} nicht beeinträchtigt. Grundsätzlich kann bei der Erfassung der Hauptkapazität C_{H} auch die Störkapazität C_{H} berücksichtigt werden.

Über die Messleitung 23 wird die Messvorrichtung 20 an eine in Fig. 4 gezeigte Auswerte- und Bedieneinheit 24 angeschlossen. In der Einheit 24 ist unter anderem eine in Fig. 8 dargestellte Auswerteschaltung 25 enthalten.

Hierbei ist in einer Messschaltung 26 das Kapazitätsnetzwerk aus Hauptkapazität C_{H}, Koppelkapazität C_{K} und Störkapazität C_{S} über die Anschlussleitungen 23a, 23b einerseits mit einem Bezugspotential AGND und andererseits mit einem Widerstand R2 sowie einem Eingang einer Umsetzschaltung 27 verbunden. Der Widerstand R2 wie auch die Umsetzschaltung 27 sind mit einer Spannungsversorgung verbunden. Der Widerstand R2 und das Kapazitätsnetzwerk bilden einen ersten RC-Schwingkreis aus. Da sowohl die Koppelkapazität C_{K} als auch die Störkapazität C_{S} konstant sind, kann die Hauptkapazität C_{H} und deren Änderungen sicher erfasst. Die Umsetzschaltung 27, in der in an sich bekannte Weise Pegelanpassungen, Signalaufbereitungen etc. erfolgen,liefert dann ein Messwertsignal 28, welches dem Wert der Hauptkapazität C_{H} entspricht.

Zusätzlich zu den Kapazitäten C_{K}, C_{S} und C_{H} können mit der Auswerteschaltung 25 auch zwischen Zellenradgehäuse 2 und Zellenrad 3 gebildete, nicht gezeigte Widerstände erfasst und bei der Erfassung und Bestimmung des Werts der Hauptkapazität C_{H} und deren Änderungen berücksichtigt werden.

Eine Referenzschaltung 29 weist einen Referenz-RC-Schwingkreis mit einem Referenzwiderstand R1 und einer Referenzkapazität C_{ref} sowie eine Umsetzschaltung 30 entsprechend der Messschaltung 26 auf, die ebenfalls mit einer Versorgungsspannung und einem Bezugspotential verbunden sind. Die Umsetzschaltung 30 liefert dann ein Referenzsignal 31. Bevorzugt entspricht die Referenzkapazität C_{ref} respektive der Referenzwert dem Wert der Serienschaltung der Hauptkapazität C_{H} und der Koppelkapazität C_{K} der Fördervorrichtung 1 vor der ersten Inbetriebnahme. Eine Änderung der Hauptkapazität C_{H} kann dann als Abweichung von diesem Wert detektiert werden.

Das Messwertsignal 28 und das Referenzsignal 31 werden einer Vergleichsschaltung 32 zugeführt, welche die beiden Signale vergleicht. Im Normalbetrieb der Zellenradschleuse 1, also ohne unerwünschten elektrischen Kontakt zwischen Zellenradgehäuse 2 und Zellenrad 3, stellt sich ein definiertes Verhältnis zwischen den beiden Signalen ein, welches bei unveränderten Betriebsparametern der Zellenradschleuse 1 unverändert bleibt. Im ungestörten Normalbetrieb leuchtet eine grüne LED 36 in der Einheit 24 in Fig. 4.

Da die Hauptkapazität C_{H} im wesentlichen nur durch die Änderungen des Spaltmaßes und Dämpfungseinflüssen des geförderten Schüttgutes verändert wird, lässt sich bei der Inbetriebnahme der Fördervorrichtung 1 bestehende Abweichungen der Referenzwert daran anpassen oder es wird diese geringe Abweichung in Kauf genommen. Um einen Wertebereich für betriebliche Abweichungen der Hauptkapazität C_{H} vom eingestellten Referenzwert zu erhalten, kann vor Inbetriebnahme der Zellenradschleuse 1 vorteilhaft ein künstlicher Kurzschluss zwischen Zellenradgehäuse 2 und Zellenrad 3 hergestellt werden. Dies entspricht dann dem größten Kapazitätswert, bestimmt durch die Koppelkapazität C_{K}. Vorher oder danach wird die Fördervorrichtung 1 mit dem Schüttgut gefüllt wird und anschließend der Kapazitätswert des Kapazitätsnetzwerk, insbesondere der Kapazitätswert der Serienschaltung von Koppelkapazität C_{K} und Hauptkapazität C_{H} bestimmt, welcher kleiner als die Koppelkapazität C_{K} ist.

Diese beiden Extremwerte der Kapazitäten legen dann den maximal benötigten Messwertsignal-Wertebereich fest, der für Änderungen der Hauptkapazität C_{H} möglich ist. Abweichungen der von der Messvorrichtung 20 erfassten Kapazität und der Referenzkapazität C_{ref} respektive des Messwertsignals 28 vom Referenzsignal 31 können dann auf diesen maximalen Messwertsignal-Wertebereich bezogen werden.

Kommt es während des Betriebs zu einem elektrisch leitenden Kontakt zwischen Zellenradgehäuse 2 und Zellenradflügeln 4 oder einem anderen Teil des Zellenrads 3, also einem Kontakt mit einem geringen elektrischen Widerstand respektive einem hohen elektrischen Leitwert, beispielsweise verursacht durch einen Metallspan oder einen direkten Kontakt zwischen Zellenradgehäuse 2 und Zellenrad 3, wird die Hauptkapazität C_{H} kurzgeschlossen. Hierdurch ergibt sich eine sehr starke Abweichung des Messsignals von dem des Normalbetriebs, welche von der Auswerteschaltung 25 ohne weiteres erkannt wird. In diesem Fall ist die Abweichung des Messwertsignals 28 um mehr als einen vorgegebenen Alarmgrenzwert vom Referenzsignal 29 gegeben, so dass ein Alarmsignal 33 ausgegeben wird, welches eine rote LED 34 in der Einheit 24 aktiviert.

Hinzu kommt, dass eine durch feuchtes Schüttgut bewirkte geringe Änderung der Hauptkapazität C_{H} aufgrund der hohen möglichen Messauflösung, bedingt durch die berührungslose Kapazitätsmessung, erkannt werden kann. Diese schüttgutbedingte Kapazitätsänderung ist deutlich kleiner als die durch eine elektrisch leitende Kontaktierung von Zellenradgehäuse 2 und Zellenrad 3 bedingte. Hierdurch können Fehlalarme relativ sicher ausgeschlossen werden.

In diesem Fall kann in der Auswerteschaltung 25 ein Warngrenzwert vorgegeben werden, der anzeigt, wenn eine solche geringfügige Änderung der Hauptkapazität C_{H} stattgefunden hat, beispielsweise durch Abnutzung des Zellenrads 3 und somit Vergrößerung der Spaltweite S_{W}. Dies wird durch die Auswerteschaltung 25 erkannt und ein Warnsignal 33 ausgegeben, welches eine orange LED 35 in der Einheit 24 aktiviert. Zusätzlich kann vorteilhaft in einer Anzeige 37 die Spaltweite S_{W} oder ein Gütewert hierfür ausgegeben werden, um einen abnutzungsbedingten bald erforderlichen Austausch der Zellenradschleuse 1 anzuzeigen.

## Patentansprüche

1. Fördervorrichtung (1) für Schüttgut mit einem Gehäuse (2) und einem darin drehbar gelagerten Rotor (3) mit Förderelementen (4, 4') für das Schüttgut, wobei das Gehäuse (2) und der Rotor (3) aus elektrisch leitendem Material bestehen, **dadurch gekennzeichnet, dass** eine Messvorrichtung (20) zur Erfassung einer durch Gehäuse (2) und Rotor (3) gebildeten Hauptkapazität (C_{H}) vorgesehen ist.

2. Fördervorrichtung (1) nach Anspruch 1, **dadurch gekennzeichnet, dass** der Rotor (3) gegenüber dem Gehäuse (2) elektrisch isoliert gelagert ist.

3. Fördervorrichtung (1) nach Anspruch 1, **dadurch gekennzeichnet, dass** der Rotor (3) mit dem Gehäuse (2) über einen ohmschen Entladewiderstand kleiner 1 GΩ, bevorzugt kleiner 1 MΩ verbunden ist.

4. Fördervorrichtung (1) nach Anspruch 3, **dadurch gekennzeichnet, dass** der Entladewiderstand durch eine in einer Kupplung (16) zwischen einer Welle (7) des Rotors (3) und einem Förderantrieb (17, 18) der Fördervorrichtung (1) vorgesehene Kupplungsisolierung (19) gebildet ist und/oder durch eine Lagerisolierung (14) mindestens eines Lagers (10) des Rotors (3) gebildet ist.

5. Fördervorrichtung (1) nach einem der voranstehenden Ansprüche, **dadurch gekennzeichnet, dass** die Messvorrichtung (20) zur Erfassung eines ohmschen Widerstands zwischen Gehäuse (2) und Rotor (3) ausgebildet ist.

6. Fördervorrichtung (1) nach einem der voranstehenden Ansprüche, **dadurch gekennzeichnet, dass** die Messvorrichtung (20) ein Koppelelement (21) zur berührungslosen, insbesondere kapazitiven, elektrischen Kopplung mit dem Rotor (3) aufweist.

7. Fördervorrichtung (1) nach Anspruch 6, **dadurch gekennzeichnet, dass** eine durch das Koppelelement (21) und den Rotor (3) gebildete Koppelkapazität (C_{K}) größer ist als die Hauptkapazität (C_{H}) und/oder eine durch das Koppelelement (21) und das Gehäuse (2) gebildete Störkapazität (Cs) kleiner ist als die Hauptkapazität (C_{H}).

8. Fördervorrichtung (1) nach Anspruch 7, **dadurch gekennzeichnet, dass** die Messvorrichtung (20) zur Erfassung der Koppelkapazität (C_{K}) und/oder der Störkapazität (Cs) ausgebildet ist.

9. Fördervorrichtung (1) nach einem der Ansprüche 6 bis 8, **dadurch gekennzeichnet, dass** das Koppelelement eine Messhülse (21) aus elektrisch leitendem Material ist, die ein Wellenende (9) einer Welle (7) des Rotors (3) umfasst und durch eine Rotorisolierung (15') gegenüber dem Rotor (3) und durch eine Gehäuseisolierung (15") gegenüber dem Gehäuse (2) elektrisch isoliert oder über einen durch die Rotorisolierung (15') und die Gehäuseisolierung (15") gebildeten ohmschen Entladewiderstand kleiner 1 GΩ, bevorzugt kleiner 1 MΩ mit dem Gehäuse (2) verbunden ist.

10. Fördervorrichtung (1) nach Anspruch 9, **dadurch gekennzeichnet, dass** ein Abstand (d_{K}) zwischen Messhülse (21) und Rotor (3) kleiner als ein Abstand (ds) zwischen Messhülse (21) und Gehäuse (2) ist und/oder die Rotorisolierung (15') dünner als die Gehäuseisolierung (15") ist.

11. Fördervorrichtung (1) nach einem der Ansprüche 9 bis 10, **dadurch gekennzeichnet, dass** die Dielektrizitätszahl (εᵣ) der Rotorisolierung (15') größer, bevorzugt deutlich größer als die Dielektrizitätszahl (εᵣ) der Gehäuseisolierung (15") ist.

12. Fördervorrichtung (1) nach einem der voranstehenden Ansprüche, **dadurch gekennzeichnet, dass** die Messvorrichtung (20) mit einer Auswerteschaltung (25) verbunden ist, wobei die Auswerteschaltung (25) eine Messschaltung (26) zum Erzeugen eines der Hauptkapazität (C_{H}) entsprechenden Messwertsignals (27) aufweist, wobei die Auswerteschaltung (25) insbesondere eine Referenzschaltung (28) zum Erzeugen eines einer vorgegebenen Referenzkapazität (C_{ref}) entsprechenden Referenzsignals (29) und eine das Referenzsignal (29) und das Messwertsignal (27) empfangende Vergleichsschaltung (30) zum Vergleichen des Messwertsignals (26) und des Referenzsignals (29) aufweist.

13. Verfahren zur Überwachung einer Fördervorrichtung (1) für Schüttgut, insbesondere nach einem der Ansprüche 1 bis 12, mit einem Gehäuse (2) und einem darin drehbar gelagerten Rotor (3) mit Förderelementen (4, 4') für das Schüttgut, wobei das Gehäuse (2) und der Rotor (3) aus elektrisch leitendem Material bestehen, **dadurch gekennzeichnet, dass** eine zwischen Gehäuse (2) und Rotor (3) gebildete Hauptkapazität (C_{H}) erfasst wird.

14. Verfahren nach Anspruch 13, **dadurch gekennzeichnet, dass** ein ohmscher Widerstand zwischen Gehäuse (2) und Rotor (3) erfasst wird.

15. Verfahren nach Anspruch 13 oder 14, **dadurch gekennzeichnet, dass** der erfasste Wert der Hauptkapazität (C_{H}) mit einem vorgegebenen Referenzwert (C_{ref}) verglichen und ein Warnsignal und/oder ein Alarmsignal ausgegeben wird, wenn der erfasste Wert der Hauptkapazität (C_{H}) um einen Warngrenzwert bzw. einen Alarmgrenzwert vom Referenzwert (C_{ref}) abweicht.

16. Verfahren nach einem der Ansprüche 13 bis 15, **dadurch gekennzeichnet, dass** aus einer Abweichung zwischen dem erfassten Wert der Hauptkapazität (C_{H}) und einem vorgegebenen Referenzwert (C_{ref}) eine Spaltweite (Sw) zwischen dem Gehäuse (2) und radial äußeren Enden von Förderelementen (4, 4') des Rotors (3) oder ein Maß für diese Spaltweite (S_{w}) abgeleitet wird.

17. Verfahren nach einem der Ansprüche 13 bis 16, **dadurch gekennzeichnet, dass** eine Abweichung zwischen dem erfassten Wert der Hauptkapazität (C_{H}) und einem vorgegebenen Referenzwert (C_{ref}) kontinuierlich oder quasikontinuierlich erfasst wird.

18. Verfahren nach einem der Ansprüche 13 bis 17, **dadurch gekennzeichnet, dass** die Hauptkapazität (C_{H}) durch ein Koppelelement (21) zur berührungslosen, insbesondere kapazitiven, elektrischen Kopplung mit dem Rotor (3) erfasst wird, und wobei insbesondere die Hauptkapazität (C_{H}) aus einem vom Koppelelement (21) abgeleiteten Messsignal, einer durch das Koppelelement (21) und den Rotor (3) gebildeten Koppelkapazität (C_{K}) und/oder einer durch das Koppelelement (21) und das Gehäuse (2) gebildeten Störkapazität (Cs) erfasst wird.

19. Verfahren nach Anspruch 18, **dadurch gekennzeichnet, dass** der Referenzwert (C_{ref}) nach einem der Ansprüche 15 bis 17 dem Wert der Koppelkapazität (C_{K}) vor der ersten Inbetriebnahme der Fördervorrichtung (1) entspricht.

## Claims

1. Transport device (1) for bulk material with a housing (2) and a rotor (3) mounted rotatably therein with transport elements (4, 4') for the bulk material, the housing (2) and the rotor (3) being made of electrically conducting material, **characterised in that** a measuring device (20) is provided for measuring a main capacitance (C_{H}) formed by the housing (2) and rotor (3).

2. Transport device (1) according to claim 1, **characterised in that** the rotor (3) is mounted so as to be insulated electrically from the housing (2).

3. Transport device (1) according to claim 1, **characterised in that** the rotor (3) is connected to the housing (2) through an ohmic discharge resistance of less than 1 GΩ, preferably less than 1 MΩ.

4. Transport device (1) according to claim 3, **characterised in that** the discharge resistance is formed by a coupling insulator (19) provided in a coupling (16) between a shaft (7) of the rotor (3) and a transport drive (17, 18) of the transport device (1) and/or is formed by a bearing insulator (14) of at least one bearing (10) of the rotor (3).

5. Transport device (1) according to one of the preceding claims, **characterised in that** the measuring device (20) is designed to measure an ohmic resistance between the housing (2) and rotor (3).

6. Transport device (1) according to one of the preceding claims, **characterised in that** the measuring device (20) exhibits a coupling element (21) for contactless, in particular capacitive, electrical coupling to the rotor (3).

7. Transport device (1) according to claim 6, **characterised in that** a coupling capacitance (C_{K}) formed by the coupling element (21) and the rotor (3) is greater than the main capacitance (C_{H}) and/or an interference capacitance (C_{S}) formed by the coupling element (21) and the housing (2) is less than the main capacitance (C_{H}).

8. Transport device (1) according to claim 7, **characterised in that** the measuring device (20) is designed to measure the coupling capacitance (C_{K}) and/or the interference capacitance (C_{S}).

9. Transport device (1) according to one of claims 6 to 8, **characterised in that** the coupling element is a measuring sleeve (21) made of electrically conducting material which encircles a shaft end (9) of a shaft (7) of the rotor (3) and is insulated electrically from the rotor (3) by a rotor insulator (15') and from the housing (2) by a housing insulator (15") or is connected to the housing (2) through an ohmic discharge resistance of less than 1 GΩ, preferably less than 1 MΩ, formed by the rotor insulator (15') and the housing insulator (15").

10. Transport device (1) according to claim 9, **characterised in that** a gap (d_{K}) between the measuring sleeve (21) and the rotor (3) is smaller than a gap (d_{S}) between the measuring sleeve (21) and the housing (2) and/or the rotor insulator (15') is thinner than the housing insulator (15").

11. Transport device (1) according to one of claims 9 to 10, **characterised in that** the dielectric constant (εᵣ) of the rotor insulator (15') is greater, preferably much greater, than the dielectric constant (εᵣ) of the housing insulator (15").

12. Transport device (1) according to one of the preceding claims, **characterised in that** the measuring device (20) is connected to an evaluation circuit (25), the evaluation circuit (25) comprising a measuring circuit (26) for producing a measurement signal (27) corresponding to the main capacitance (C_{H}), the evaluation circuit (25) comprising in particular a reference circuit (28) for producing a reference signal (29) corresponding to a predetermined reference capacitance (C_{ref}) and a comparison circuit (30) receiving the reference signal (29) and the measurement signal (27) for comparing the measurement signal (26) and the reference signal (29).

13. Method for monitoring a transport device (1) for bulk material, in particular according to one of claims 1 to 12, with a housing (2) and a rotor (3) mounted rotatably therein with transport elements (4, 4') for the bulk material, the housing (2) and the rotor (3) being made of electrically conducting material, **characterised in that** a main capacitance (C_{H}) formed between the housing (2) and rotor (3) is measured.

14. Method according to claim 13, **characterised in that** an ohmic resistance between the housing (2) and rotor (3) is measured.

15. Method according to claim 13 or 14, **characterised in that** the measured value of the main capacitance (C_{H}) is compared with a predetermined reference value (C_{ref}) and a warning signal and/or an alarm signal is emitted when the measured value of the main capacitance (C_{H}) differs from the reference value (C_{ref}) by a warning limit value or an alarm limit value.

16. Method according to one of claims 13 to 15, **characterised in that** a difference between the measured value of the main capacitance (C_{H}) and a predetermined reference value (C_{ref}) is used to determine a gap width (S_{w}) between the housing (2) and radially outer ends of transport elements (4, 4') of the rotor (3) or a measurement for this gap width (S_{w}).

17. Method according to one of claims 13 to 16, **characterised in that** a difference between the measured value of the main capacitance (C_{H}) and a predetermined reference value (C_{ref}) is measured continuously or quasi-continuously.

18. Method according to one of claims 13 to 17, **characterised in that** the main capacitance (C_{H}) is measured by a coupling element (21) for contactless, in particular capacitive, electrical coupling with the rotor (3), and wherein in particular the main capacitance (C_{H}) is measured using a measuring signal derived from the coupling element (21), a coupling capacitance (C_{K}) formed by the coupling element (21) and the rotor (3) and/or an interference capacitance (C_{S}) formed by the coupling element (21) and the housing (2).

19. Method according to claim 18, **characterised in that** the reference value (C_{ref}) according to one of claims 15 to 17 corresponds to the value of the coupling capacitance (C_{K}) before the initial commissioning of the transport device (1).

## Revendications

1. Dispositif de transport (1) pour des produits en vrac comprenant un boîtier (2) et un rotor (3) logé dans ce dernier de manière à pouvoir tourner et doté d'éléments de transport (4, 4') pour des produits en vrac, sachant que le boîtier (2) et le rotor (3) sont constitués d'un matériau électroconducteur, **caractérisé en ce qu'**un dispositif de mesure (20) est prévu pour détecter une capacité principale (C_{H}) formée par le boîtier (2) et le rotor (3).

2. Dispositif de transport (1) selon la revendication 1, **caractérisé en ce que** le rotor (3) est logé de manière isolée électriquement par rapport au boîtier (2).

3. Dispositif de transport (1) selon la revendication 1, **caractérisé en ce que** le rotor (3) est relié au boîtier (2) par l'intermédiaire d'une résistance de déchargement ohmique inférieure à 1 GQ, de préférence inférieure à 1 MΩ.

4. Dispositif de transport (1) selon la revendication 3, **caractérisé en ce que** la résistance de déchargement est formée par une isolation d'accouplement (19) prévue dans un accouplement (16) entre un arbre (7) du rotor (3) et un entraînement de transport (17, 18) du dispositif de transport (1) et/ou est formée par une isolation de palier (14) d'au moins un palier (10) du rotor (3).

5. Dispositif de transport (1) selon l'une quelconque des revendications précédentes, **caractérisé en ce que** le dispositif de mesure (20) est réalisé pour détecter une résistance ohmique entre le boîtier (2) et le rotor (3).

6. Dispositif de transport (1) selon l'une quelconque des revendications précédentes, **caractérisé en ce que** le dispositif de mesure (20) présente un élément de couplage (21) servant à l'accouplement électrique sans contact, en particulier capacitif au rotor (3).

7. Dispositif de transport (1) selon la revendication 6, **caractérisé en ce qu'**une capacité de couplage (C_{K}) formée par l'élément de couplage (21) et le rotor (3) est plus grande que la capacité principale (C_{H}), et/ou **en ce qu'**une capacité de perturbation (C_{S}) formée par l'élément de couplage (21) et le boîtier (2) est plus petite que la capacité principale (C_{H}).

8. Dispositif de transport (1) selon la revendication 7, **caractérisé en ce que** le dispositif de mesure (20) est réalisé pour détecter la capacité de couplage (C_{K}) et/ou la capacité de perturbation (C_{S}).

9. Dispositif de transport (1) selon l'une quelconque des revendications 6 à 8, **caractérisé en ce que** l'élément de couplage est une douille de mesure (21) constituée d'un matériau électriquement conducteur, laquelle comprend une extrémité d'arbre (9) d'un arbre (7) du rotor (3) et qui est isolée électriquement par rapport au rotor (3) par une isolation de rotor (15') et par rapport au boîtier (2) par une isolation de boîtier (15") ou qui est reliée au boîtier (2) par l'intermédiaire d'une résistance de déchargement ohmique formée par l'isolation de rotor (15') et l'isolation de boîtier (15"), inférieure à 1 GΩ, de préférence inférieure à 1 MΩ.

10. Dispositif de transport (1) selon la revendication 9, **caractérisé en ce qu'**un espacement (d_{K}) entre la douille de mesure (21) et le rotor (3) est plus petit qu'un espacement (d_{S}) entre la douille de mesure (21) et le boîtier (2), et/ou **en ce que** l'isolation de rotor (15') est plus fine que l'isolation de boîtier (15").

11. Dispositif de transport (1) selon l'une quelconque des revendications 9 à 10, **caractérisé en ce que** l'indice diélectrique (εᵣ) de l'isolation de rotor (15') est plus grand, de préférence nettement plus grand que l'indice diélectrique (εᵣ) de l'isolation de boîtier (15").

12. Dispositif de transport (1) selon l'une quelconque des revendications précédentes, **caractérisé en ce que** le dispositif de mesure (20) est relié à un circuit d'évaluation (25), sachant que le circuit d'évaluation (25) présente un circuit de mesure (26) servant à générer une signal de valeur de mesure (27). correspondant à la capacité principale (C_{H}), sachant que le circuit d'évaluation (25) présente en particulier un circuit de référence (28) servant à générer un signal de référence (29) correspondant à une capacité de référence (C_{ref}) prédéfinie et un circuit de comparaison (30) recevant le signal de référence (29) et le signal de valeur de mesure (27), servant à comparer le signal de valeur de mesure (26) et le signal de référence (29).

13. Procédé servant à surveiller un dispositif de transport (1) pour des produits en vrac, en particulier selon l'une quelconque des revendications 1 à 12, comprenant un boîtier (2) et un rotor (3) logé dans ce dernier de manière à pouvoir tourner et doté d'éléments de transport (4, 4') pour des produits en vrac, sachant que le boîtier (2) et le rotor (3) sont constitués d'un matériau électriquement conducteur, **caractérisé en ce qu'**est détectée une capacité principale (C_{H}) formée entre le boîtier (2) et le rotor (3).

14. Procédé selon la revendication 13, **caractérisé en ce qu'**une résistance ohmique est détectée entre le boîtier (2) et le rotor (3).

15. Procédé selon la revendication 13 ou 14, **caractérisé en ce que** la valeur détectée de la capacité principale (C_{H}) est comparée à une valeur de référence (C_{ref}) prédéfinie, et **en ce qu'**un signal d'alerte et/ou un signal d'alarme sont émis lorsque la valeur détectée de la capacité principale (C_{H}) diverge de la valeur de référence (C_{ref}) d'une valeur limite d'alerte ou d'une valeur limite d'alarme.

16. Procédé selon l'une quelconque des revendications 13 à 15, **caractérisé en ce qu'**une largeur d'interstice (S_{w}) entre le boîtier (2) et des extrémités radialement extérieures d'éléments de transport (4, 4') du rotor (3) ou une mesure pour ladite largeur d'interstice (S_{w}) sont déduits d'un écart entre la valeur détectée de la capacité principale (C_{H}) et une valeur de référence (C_{ref}) prédéfinie.

17. Procédé selon l'une quelconque des revendications 13 à 16, **caractérisé en ce qu'**un écart entre la valeur détectée de la capacité principale (C_{H}) et une valeur de référence (C_{ref}) prédéfinie est détecté en continu ou quasi en continu.

18. Procédé selon l'une quelconque des revendications 13 à 17, **caractérisé en ce que** la capacité principale (C_{H}) est détectée par un élément de couplage (21) servant à l'accouplement électrique sans contact, de préférence capacitif, au rotor (3), sachant en particulier que la capacité principale (C_{H}) est détectée à partir d'un signal de mesure dérivé de l'élément de couplage (21), d'une capacité de couplage (C_{K}) formée par l'élément de couplage (21) et le rotor (3) et/ou par une capacité de perturbation (C_{S}) formée par l'élément de couplage (21) et le boîtier (2).

19. Procédé selon la revendication 18, **caractérisé en ce que** la valeur de référence (C_{ref}) selon l'une quelconque des revendications 15 à 17 correspond à la valeur de la capacité de couplage (C_{K}) avant la première mise en service du dispositif de transport (1).
